# EUROPÄISCHE PATENTSCHRIFT

(11) **EP 1 243 818 B1**
(45) Veröffentlichungstag und Bekanntmachung des Hinweises auf die Patenterteilung: **02.11.2005**
(21) Anmeldenummer: 02005090.2
(22) Anmeldetag: 07.03.2002
(51) Int. Cl.: F16H 61/02, F16H 61/06

(54) **Elektrische Steuereinrichtung eines Kraftfahrzeug-Antriebsstranges**
Electric control device in a vehicle drive train
Dispositif de commande électrique pour mécanisme de transmission d'un véhicule automobile

(30) Priorität: 23.03.2001 DE 10114374
(43) Veröffentlichungstag der Anmeldung: 25.09.2002
(73) Patentinhaber: Kirstein, Gerhard, 86152 Augsburg (DE)
(72) Erfinder: Kirstein, Gerhard, 86152 Augsburg (DE)
(74) Vertreter: Vetter, Ewald Otto

(56) Entgegenhaltungen:
- EP-A- 1 067 316
- US-A- 5 971 889

## Beschreibung

Die Erfindung betrifft eine elektrische Steuereinrichtung eines Kraftfahrzeug-Antriebsstranges gemäß dem Oberbegriff von Anspruch 1, und ein Verfahren gemäß dem Oberbegriff von Anspruch 10.

Demgemäß betrifft die Erfindung eine elektrische Steuereinrichtung eines Kraftfahrzeug-Antriebsstranges, der mindestens ein elektrisch betätigbares Ventil in einer Hydraulikanlage zur hydraulischen Betätigung von mindestens einem Gangschaltelement in Form einer Kupplung oder einer Bremse enthält, wobei die Steuereinrichtung einen Pulserzeuger zur Erzeugung von elektrischen Pulsen aufweist, durch welche ein elektromagnetisch bewegbarer Ventilteil des Ventils relativ zu einem anderen Ventilteil bewegbar ist zur Einstellung einer Ventilöffnung, wobei die Frequenz der aufeinander folgenden Pulse, im folgenden Ansteuerfrequenz genannt, so hoch ist, dass der bewegbare Ventilteil den Pulsen nicht folgen kann, sondern der bewegbare Ventilteil nur in Abhängigkeit vom Effektivwert des Stromes der aufeinander folgenden Pulse positionierbar ist.

Die EP 1 067 316 A1 zeigt eine elektrische Steuereinrichtung eines Kraftfahrzeug-Antriebsstranges mit einer Vielzahl von Gangwechsel-Solenoidventilen, welche einen Signaldruck abhängig vom Wert des elektrischen Stromes erzeugen, welcher ihnen zugeführt wird. Zum Reinigen der Solenoidventile wird ihnen Strom derart zugeführt, dass er den Öffnungsgrad der Ventile innerhalb eines Bereiches verändert, innerhalb von welchem der ausgegebene Signaldruck höher als ein Minimalsignaldruck ist, der zum vollständigen Öffnen eines Gangwechselventils erforderlich ist. Aus der US 5 971 889 ist eine elektrische Steuereinrichtung eines Kraftfahrzeug-Antriebsstranges bekannt, bei welcher Solenoidventilen ein Zitterstrom zugeführt wird, dessen Frequenz der bewegliche Ventilteil folgen kann, um dadurch das Ventil zu reinigen, zu Zeiten, während Schaltelementen kein Öldruck zugeführt wird. Elektrisch betätigbare Ventile, sog. Magnetventile, haben einen elektromagnetisch bewegbaren Ventilteil, welcher relativ zu einem nicht bewegbaren Ventilteil bewegbar sind (Ventilkörper und Ventilsitz oder Steuerschieber und Steuerkante). Je nach Art der Hydraulikflüssigkeit besteht mehr oder weniger die Gefahr, dass sich an einem oder beiden dieser Ventilteile Verunreinigungen festsetzen, was Partikel aus der Hydraulikflüssigkeit sein können oder durch chemische oder elektrolytische Reaktionen entstehen kann.

Durch die Erfindung soll die Aufgabe gelöst werden, auf einfache und preiswerte Art und Weise Ablagerungen an Ventilteilen an den Stellen zu vermeiden, welche mit der Hydraulikflüssigkeit in Kontakt kommen, d. h. insbesondere an einem Ventilkörper oder Ventilschieber und/oder an einem Ventilsitz und/oder an Steuerkanten.

Diese Aufgabe wird gemäß der Erfindung durch die kennzeichnenden Merkmale von Anspruch 1 gelöst.

Die Erfindung wird demzufolge dadurch gelöst, dass eine Mikrocomputereinrichtung mit mindestens einem Mikrocomputer und mit mindestens einem Computerprogramm vorgesehen ist, durch welches
a) unmittelbar nach einem Gangwechsel oder nach dem Anfahren des Kraftfahrzeuges die Ansteuerfrequenz des Ventils automatisch so weit erniedrigt wird, dass der elektrisch bewegbare Ventilteil den Pulsen folgen kann und dadurch Schwingungsamplituden ausführt, deren Frequenz von der Ansteuerfrequenz abhängig ist, und
b) unmittelbar vor einem Gangwechsel oder beim Anfahren des Kraftfahrzeuges die Ansteuerfrequenz wieder so weit erhöht wird, dass der elektrisch bewegbare Ventilteil den einzelnen Pulsen nicht mehr folgen kann, sondern nur noch in Abhängigkeit von dem Effektivwert des Stromes der aufeinanderfolgenden Pulse positionierbar ist.

Die Erfindung definiert zwei Betriebszustände. Der erste Betriebszustand ist der übliche Betriebszustand, bei welcher die Ansteuerfrequenz so hoch ist, dass der elektromagnetisch bewegbare Ventilteil ihr nicht folgen kann. Hiermit ist gemeint, dass der elektromagnetisch bewegbare Ventilteil nicht bei jedem elektrischen Puls, mit welchem er angesteuert wird, bewegt wird, sondern dass die Pulse so schnell aufeinander folgen, dass der bewegbare Ventilteil in einer dem Effektivwert des Stromes der aufeinander folgenden Pulse entsprechenden Stellung gehalten wird oder in diese Stellung gebracht wird. Diese Stellung kann eine vollständige oder teilweise Ventiloffenstellung oder eine vollständige oder teilweise Ventilschließstellung sein. Der andere Betriebszustand nach der Erfindung besteht darin, dass die Ansteuerfrequenz so weit reduziert wird, dass der elektromagnetisch bewegbare Ventilteil bei jedem Puls, welcher das Ventil elektromagnetisch erregt, bewegt wird. Oder anders ausgedrückt, der elektromagnetisch bewegbare Ventilteil kann der Ansteuerfrequenz folgen. Wenn der Ventilteil der Ansteuerfrequenz folgt, dann schwingt er im Rhythmus der Ansteuerfrequenz. Dies kann auch Druckschwankungen in der Hydraulikflüssigkeit zur Folge haben, welche zu der niedrigen Ansteuerfrequenz proportional sind.

Gemäß der Erfindung wird der Vorteil erzielt, dass durch den Ventilteil, welcher der erniedrigten Ansteuerfrequenz entsprechend proportional schwingt, und vorzugsweise auch durch mitschwingende Druckschwankungen in der Hydraulikflüssigkeit, Materialablagerungen an diesem Ventilteil und an benachbarten, von der Hydraulikflüssigkeit benetzten Ventilteilen vermieden werden. Ablagerungen werden bereits in ihrem Anfangszustand von den relativ zueinander bewegten Ventilteilen abgeschabt und von der Druckflüssigkeit weggespült.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben.

### In den Zeichnungen zeigen

Fig. 1 ein Schaltbild der elektrischen Steuereinrichtung nach der Erfindung eines Kraftfahrzeug-Antriebsstranges,
Fig. 2 das Schaltbild einer weiteren Ausführungsform der elektrischen Steuereinrichtung nach der Erfindung eines Kraftfahrzeug-Antriebsstranges,
Fig. 3 ein Druckkurven-Schaltbild der Druckkurven in der Hydraulikanlage von zwei Gangschaltelementen beim Schalten von einem Gang in den anderen Gang ohne Zugkraftunterbrechung, wobei das eine Gangschaltelement geöffnet wird, während das andere zeitlich damit überlappend geschlossen wird.

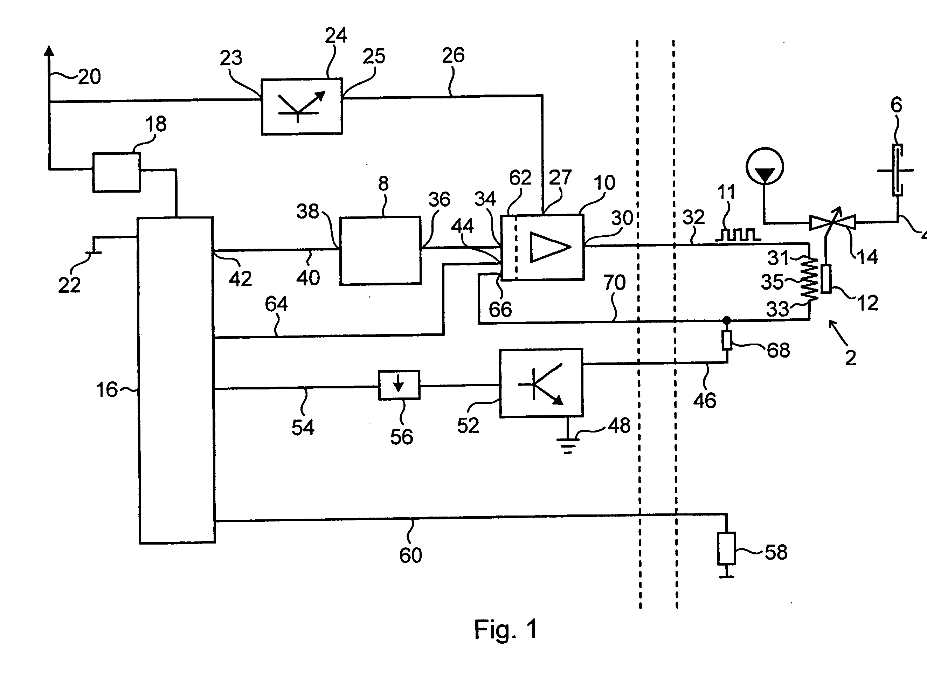

Die in Fig. 1 gezeigte elektrische Steuereinrichtung nach der Erfindung ist für Hydraulikanlagen beliebiger Art verwendbar, vorzugsweise jedoch für einen Kraftfahrzeug-Antriebsstrang, der mindestens ein, vorzugsweise durch Pulsbreitensteuerung, elektrisch betätigbares Ventil 2 (Elektro-Magnetventil) in einer Hydraulikanlage 4 zur hydraulischen Betätigung von mindestens einem Gangschaltelement 6 in Form einer Kupplung (Reibkupplung) oder einer Bremse enthält.

Die Steuereinrichtung enthält einen Pulserzeuger 8,10 zur Erzeugung von elektrischen Pulsen 11, durch welche in einer Wicklung 35 des Ventils 2 ein Magnetfeld erzeugt und dadurch ein elektromagnetisch bewegbarer Ventilteil 12 relativ zu einem anderen Ventilteil 14 bewegbar ist zur Einstellung einer Ventilöffnung. Die Frequenz der aufeinander folgenden Pulse 11, im folgenden Ansteuerfrequenz genannt, ist so hoch, dass der bewegbare Ventilteil 12 den Pulsen nicht folgen kann, sondern der bewegbare Ventilteil 12 nur in Abhängigkeit vom Effektivwert des Stromes der aufeinander folgenden Pulse 11 positionierbar ist.

Der Pulserzeuger enthält beispielsweise einen Oszillator 8 und eine positive Leistungsstufe 10.

Eine Mikrocomputereinrichtung enthält mindestens einen Mikrocomputer 16, welcher über eine Spannungsstabilierungsschaltung 18 an einen Spannungs-Versorgungsspannungseingang 20 anschließbar ist und ein Bezugspotential oder Erdpotential 22 aufweist. Der Mikrocomputer 16 enthält mindestens ein Computerprogramm, durch welches
a) unmittelbar nach einem Gangwechsel oder nach dem Anfahren des Kraftfahrzeuges die Ansteuerfrequenz des Ventils 2 automatisch so weit erniedrigt wird, dass der elektrisch bewegbare Ventilteil 12 den Pulsen 11 folgen kann und dadurch Schwingungsamplituten mit einer Schwingungsfrequenz ausführt, die von der Ansteuerfrequenz abhängig ist, vorzugsweise proportional zu dieser ist, d. h. die Pulse 11 regen den bewegbaren Ventilteil zu Bewegungsamplituden an, und
b) unmittelbar vor einem Gangwechsel oder beim Anfahren des Kraftfahrzeuges die Ansteuerfrequenz wieder so weit erhöht wird, dass der elektrisch bewegbare Ventilteil den Pulsen 11 nicht mehr folgen kann, sondern nur noch in Abhängigkeit von dem Effektivwert des Stromes der aufeinander folgenden Pulse 11 positionierbar ist.

Zur Strom- bzw. Spannungsversorgung der an den Mikrocomputer 16 angeschlossenen Bauelemente ist vorzugsweise eine Spannungsbegrenzungsschaltung 24 zur Begrenzung der Ansteuerspannung des Ventils 2 auf einen Maximalwert vorgesehen. Gemäß der bevorzugten Ausführungsform ist die Spannungsbegrenzungsschaltung 24 auf ihrer Eingangsseite 23 an den Versorgungsspannungseingang 20 angeschlossen und auf ihrer Ausgangsseite 25 über eine Leitung 26 an einen Spannungseingang 27 der positiven Leistungsstufe 10 angeschlossen.

Ein Pulsausgang 30 der positiven Leistungsstufe 10 ist zur Abgabe der elektrischen Pulse über eine elektrische Leitung 32 an ein Eingangsende 31 der elektrischen Wicklung 35 des Magnetventils 2 angeschlossen oder anschließbar. An einen Ansteuerfrequenzeingang 34 der positiven Leistungsstufe 10 ist ein Ansteuerfrequenzausgang 36 des Oszillators 8 angeschlossen. Einem Sollwert-Eingang 38 des Oszillators 8 ist von einem Sollwert-Ausgang 42 des Mikrocomputers 16 über eine elektrische Leitung 40 ein Ansteuerfrequenz-Sollwert vorgebbar.

Die positive Leistungsstufe 10 hat einen Strom-Effektivwert-Einstelleingang 44 zur Einstellung des Effektivwertes des Stromes der aufeinander folgenden Pulse 11, die von der positiven Leistungsstufe 10 erzeugt und an das Ventil 2 abgegeben werden.

Die elektrische Wicklung 35 des Ventils 2 ist an ihrem Ausgangsende 33 durch eine Ausgangsleitung 46 mit Erdpotential 48 oder einem anderen Bezugspotential elektrisch verbunden. Diese Verbindung enthält vorzugsweise eine Überwachungsschaltung 52, 56 zur Überwachung von Funktionsdefekten des Mikrocomputers 16, oder zur Überwachung von Funktionsdefekten des Mikrocomputers 16 und von dessen Peripheriegeräten, oder zur Überwachung von Funktionsdefekten von Peripheriegeräten des Mikrocomputers, und zum Abschalten des Ventils 2, wenn die Überwachungsschaltung 52, 56 einen Defekt erkennt. Diese Überwachungsschaltung enthält vorzugsweise in der Verbindung der Ausgangsleitung 46 mit dem Erdpotential 48 eine negative Leistungsstufe 52, welche normalerweise auf Durchlaß geschaltet ist (Schalter "ein"). Bei Auftreten eines der genannten Defekte wird die negative Leistungsstufe 52 vom Mikrocomputer 16 über eine Ansteuerleitung 54, welche vorzugsweise eine retriggerbare Kippstufe 56 (Monoflop) enthält, automatisch auf Sperrung geschaltet (Schalter "aus"), so dass kein Strom mehr von der elektrischen Wicklung 35 des Ventils 2 auf Erdpotential 48 abfließen kann. Eine solche Überwachungsschaltung kann derart ausgebildet sein, dass der Antriebsstrang bei Auftreten eines der genannten Defekte noch durch ein Notprogramm betriebsbereit bleibt. Eine Überwachungsschaltung, auch Watch Dog Circuit genannt, zur Umschaltung auf eine Notprogramm, ist beispielsweise aus der DE 39 29 303 C2 für eine elektronische Rußfilter-Steuereinrichtung für die Abgase von Dieselmotoren bekannt.

Der Hydraulikdruck in der Hydraulikanlage 4 kann beispielsweise durch einen Drucksensor 58 erfaßt und über eine Druck-Istwertleitung 60 dem Mikrocomputer 16 mitgeteilt werden.

Der Strom-Effektivwert der aufeinanderfolgenden elektrischen Pulse 11, welche von der positiven Leistungsstufe 10 für das Ventil 2 erzeugt werden, wird geregelt in Abhängigkeit von einem Effektivwert-Sollwert und einem Effektivwert-Istwert.

Bei der Ausführungsform von Fig. 1 wird die positive Leistungsstufe 10 von einem Regler 62 geregelt. Der Effektivwert-Sollwert wird vom Mikrocomputer 16 über eine Strom-Sollwert-Leitung 64 dem Strom-Effektivwert-Einstelleingang 44 zugeleitet und mit dem Effektivwert-Istwert an einem Strom-Istwert-Eingang 66 verglichen. Der Regler 62 regelt in Abhängigkeit von dem Vergleich des Istwertes am Strom-Istwert-Eingang 66 mit dem Sollwert am Eingang 44 den Effektivwert der aufeinander folgenden elektrischen Pulse 11, die von der positiven Leistungsstufe 10 erzeugt werden für die elektrische Wicklung 35 des Ventils 2.

Die Ausgangsleitung 46 ist über einen Meßwiderstand 68 an das Ausgangsende 33 der Wicklung 35 angeschlossen. Eine Strom-Istwert-Meßleitung 70 hat ein Ende, welches zwischen dem Meßwiderstand 68 und der Wicklung 35 an deren Ausgangsende 33 angeschlossen ist, und ein Ende, welches an den Strom-Istwert-Eingang 66 des Reglers 62 angeschlossen ist. Dadurch findet der Sollwert-lstwert-Vergleich auf der Eingangsseite des Reglers 62 durch Hardware statt.

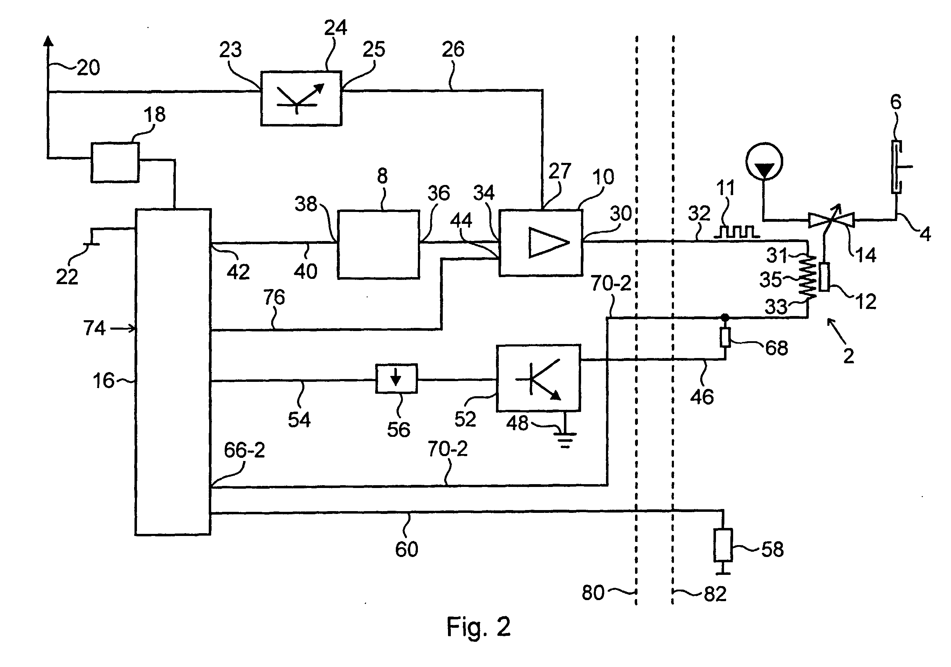

Die Ausführungsform von Fig. 2 ist identisch mit der von Fig. 1, mit der Ausnahme, dass die Strom-lstwert-Meßleitung 70-2 mit ihrem von der Wicklung 35 entfernten Ende 66-2 an den Mikrocomputer 16 angeschlossen ist, und der Mikrocomputer 16 den Strom-Effektivwert-Istwert der Meßleitung 70-2 durch Software mit einem Strom-Effektivwert-Sollwert 74 vergleicht und in Abhängigkeit vom Vergleichsergebnis über eine Stellgrößenleitung 76 eine Strom-Effektivwert-Stellgröße an den Strom-Effektivwert-Einstelleingang 44 der positiven Leistungsstufe 10 abgibt. Die positive Leistungsstufe 10 erzeugt somit einen Strom-Effektivwert der aufeinanderfolgenden elektrischen Pulse 11, welcher von dieser Stellgröße abhängig ist. Der Strom-Effektivwert-Sollwert 74 ist in Fig. 2 schematisch durch einen Pfeil am Mikrocomputer 16 dargestellt. Er kann variabel durch einen Sollwert-Eingang eingebbar oder im Mikrocomputer 16 fest vorgegeben sein. Die Regelung des Strom-Effektivwertes findet in Fig. 2 im Mikrocomputer 16 statt, d. h. durch Software.

In den Fig. 1 und 2 ist durch eine gestrichelte Linie 80 die elektrische Steuereinrichtung bzw. deren Schnittstelle, und durch eine gestrichelte Linie 82 der Kraftfahrzeug-Antriebsstrang bzw. dessen Schnittstelle schematisch dargestellt.

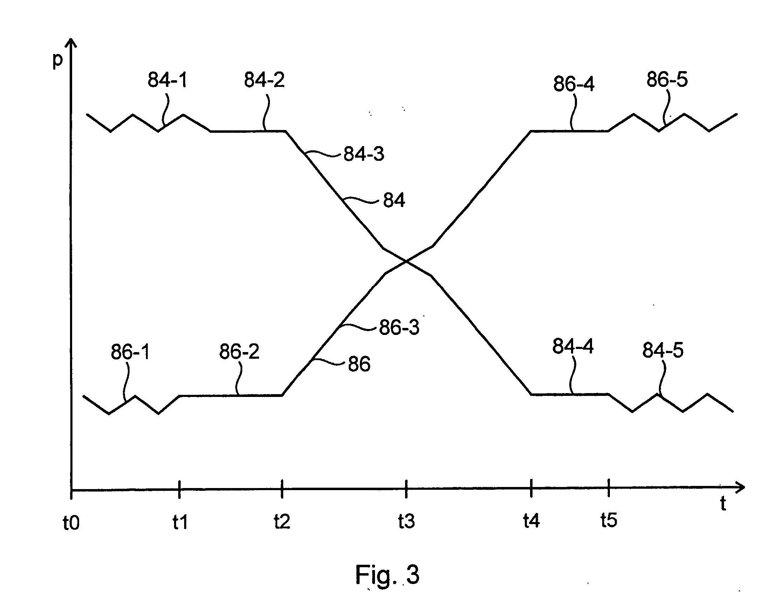

Fig. 3 zeigt ein Diagramm mit einer Zeitachse "t" und einer rechtwinklig dazu angeordneten Druckachse "p" des Hydraulikdruckes in der Hydraulikanlage 4. Das Diagramm zeigt eine Druckkurve 84, welche von links oben nach rechts unten verläuft und von einem Ventil 2 der genannten Art gemäß der Erfindung geregelt wird, und eine zweite Diagrammkurve 86, welche von einem weiteren solchen Ventil 2 gemäß der Erfindung geregelt wird und von links unten nach rechts oben verläuft. Die beiden Ventile 2 und damit auch die beiden Druckkurven 84 und 86 gehören je zu einem anderen Getriebegang des Antriebsstranges und zeigen das Schalten von einem Gang in den anderen Gang ohne Zugkraftunterbrechung. Im Zeitraum 0 bis t1 werden die Ventile 2 von beiden Gängen mit so niedriger Frequenz durch aufeinanderfolgende elektrische Pulse 11 der positiven Leistungsstufe 10 angesteuert, dass der bewegbare Ventilteil 12 von jedem Puls bewegt wird, so dass er eine Bewegungsamplitude ausführt und der in Fig. 3 gezeigte Hydraulikdruck abhängig von der Ansteuerfrequenz der Pulse 11 Druckamplituden 84-1 bzw. 86-1 ausführt. Die Druckschwankungen sind in Fig. 3 durch die Kurvenabschnitt 84-1 und 86-1 dargestellt. Zum Zeitpunkt t1 unmittelbar vor einem Gangwechsel oder beim Anfahren des Kraftfahrzeuges wird die Ansteuerfrequenz der elektrischen Pulse 11 der positiven Leistungsstufe 10 so weit erhöht, dass der bewegbare Ventilteil 12 und damit auch der Hydraulikdruck der Ansteuerfrequenz nicht mehr folgen kann, so dass der bewegbare Ventilteil 12 eine dem Effektivwert des Stromes der elektrischen Pulse 11 entsprechende Position einnimmt und der Hydraulikdruck nicht mehr schwankt, entsprechend den Diagrammabschnitten 84-2 bzw. 86-2. Durch Pulsbreitensteuerung der positiven Leistungsstufe 10 wird im Zeitbereich von t2 bis t4 das Gangschaltelement 6 (Kupplung oder Bremse) des Quellganges (bisheriger Gang) fortlaufend weiter geöffnet und das Gangschaltelement 6 (Kupplung oder Bremse) des Zielganges (neu zu schaltender Gang) fortlaufend stärker geschlossen, wobei sich die Kurvenabschnitte 84-3 und 86-3 der beiden Diagrammkurven 84 und 86 im Zeitpunkt t3 kreuzen und stets mindestens eines der beiden Schaltelemente 6 Drehmoment überträgt, so dass keine Zugkraftunterbrechung im Antriebsstrang auftritt. Im folgenden Zeitabschnitt t4 bis t5 ist die Ansteuerfrequenz noch so hoch, dass der bewegbare Ventilteil 2 der Ansteuerfrequenz nicht folgen kann und der Hydraulikdruck konstant bleibt entsprechend den Kurvenabschnitten 84-4 und 86-4. Ab dem Zeitpunkt t5 wird die Ansteuerfrequenz wieder so weit reduziert, dass der bewegbare Ventilteil 12 der beiden Ventile 2 den Pulsen 11 folgen kann und dadurch auch wieder entsprechende Druckschwankungen entstehen, wie sie in Fig. 3 durch die Abschnitt 84-5 bzw. 86-5 gezeigt sind.

## Patentansprüche

1. Elektrische Steuereinrichtung eines Kraftfahrzeug-Antriebsstranges, der mindestens ein elektrisch betätigbares Ventil (2) in einer Hydraulikanlage (4) zur hydraulischen Betätigung von mindestens einem Gangschaltelement (6) in Form einer Kupplung oder einer Bremse enthält, wobei die Steuereinrichtung einen Pulserzeuger (8, 10) zur Erzeugung von elektrischen Pulsen (11) aufweist, durch welche ein elektromagnetisch bewegbarer Ventilteil (12) des Ventils relativ zu einem anderen Ventilteil (14) bewegbar ist zur Einstellung einer Ventilöffnung, wobei die Frequenz der aufeinander folgenden Pulse (11), im folgenden Ansteuerfrequenz genannt, so hoch ist, dass der bewegbare Ventilteil (12) den Pulsen (11) nicht folgen kann, sondern der bewegbare Ventilteil (12) nur in Abhängigkeit vom Effektivwert des Stromes der aufeinander folgenden Pulse (11) positionierbar ist,
**dadurch gekennzeichnet,**
**dass** eine Mikrocomputereinrichtung mit mindestens einem Mikrocomputer (16) und mit mindestens einem Computerprogramm vorgesehen ist, durch welches
a) unmittelbar nach einem Gangwechsel oder nach dem Anfahren des Kraftfahrzeuges die Ansteuerfrequenz des Ventils (2) automatisch so weit erniedrigt wird, dass der elektrisch bewegbare Ventilteil (12) den Pulsen (11) folgen kann und dadurch Schwingungsamplituden ausführt, deren Frequenz von der Ansteuerfrequenz abhängig ist, und
b) unmittelbar vor einem Gangwechsel oder beim Anfahren des Kraftfahrzeuges die Ansteuerfrequenz wieder so weit erhöht wird, dass der elektrisch bewegbare Ventilteil (12) den Pulsen (11) nicht mehr folgen kann, sondern nur noch in Abhängigkeit von dem Effektivwert des Stromes der aufeinander folgenden Pulse (11) positionierbar ist.

2. Elektrische Steuereinrichtung nach Anspruch 1,
**dadurch gekennzeichnet,**
**dass** eine Regeleinrichtung (62, 64, 70; 16, 76, 70-2) zur Regelung des Effektivwertes des Stromes der aufeinander folgenden Pulse (11) vorgesehen ist, die dem Ventil (2) zugeleitet werden.

3. Elektrische Steuereinrichtung nach einem der vorhergehenden Ansprüche,
**dadurch gekennzeichnet,**
**dass** der Pulserzeuger (8, 10) eine positive Leistungsstufe (10) enthält, die einen Pulsausgang (30) zur Abgabe der elektrischen Pulse (11) mit der genannten Ansteuerfrequenz aufweist, dass an einen Ansteuerfrequenzeingang (34) der positiven Leistungsstufe (10) ein Ansteuerfrequenzausgang (36) eines Oszillators (8) angeschlossen ist, dem von dem Mikrocomputer (16) ein Ansteuerfrequenz-Sollwert (40) vorgebbar ist, und dass die positive Leistungsstufe (10) einen Strom-Effektivwert-Einstelleingang (44) zur Einstellung des Effektivwertes des Stromes der aufeinanderfolgenden Pulse (11) aufweist, die von der positiven Leistungsstufe für das Ventil (2) erzeugt werden.

4. Elektrische Steuereinrichtung nach Anspruch 3,
**dadurch gekennzeichnet,**
**dass** ein Versorgungsspannungseingang (20) über eine Spannungsbegrenzungsschaltung (24) an einen Spannungseingang (27) der positiven Leistungsstufe (10) angeschlossen ist.

5. Elektrische Steuereinrichtung nach Anspruch 3 oder 4,
**dadurch gekennzeichnet,**
**dass** die positive Leistungsstufe (10) mit einem Regler (62) versehen ist, der in Abhängigkeit von einem vorgegebenen Strom-Effektivwert-Sollwert eines Sollwertgebers (16, 64) und in Abhängigkeit von einem Strom-Effektivwert-Istwert eines Istwertgebers (68, 70) des Stromes der aufeinander folgenden elektrischen Pulse (11) des Ventils (2) eine Stellgröße für die positive Leistungsstufe (10) erzeugt und dadurch den Effektivwert des elektrischen Stromes dieser Pulse (11) regelt.

6. Elektrische Steuereinrichtung nach Anspruch 3 oder 4,
**dadurch gekennzeichnet,**
**dass** ein Strom-Effektivwert-Istwertgeber (68, 70-2) des elektrischen Stromes der aufeinander folgenden elektrischen Pulse (11) an den Mikrocomputer (16) angeschlossen ist, dass der Mikrocomputer (16) ein Computerprogramm enthält, welches in Abhängigkeit von dem Strom-Effektivwert-Istwert und in Abhängigkeit von einem Strom-Effektivwert-Sollwert (74) eine Effektivstrom-Stellgröße (76) erzeugt, welche von dem Mikrocomputer (16) an den Strom-Effektivwert-Einstelleingang (44) der positiven Leistungsstufe (10) übertragbar ist.

7. Elektrische Steuereinrichtung nach einem der vorhergehenden Ansprüche,
**dadurch gekennzeichnet,**
**dass** der Mikrocomputer (16) über eine Spannungs-Stabilisierungsschaltung (18) an einen Spannungs-Versorgungseingang (20) angeschlossen ist.

8. Elektrische Steuereinrichtung nach einem der vorhergehenden Ansprüche,
**dadurch gekennzeichnet,**
**dass** eine Überwachungsschaltung (16, 56, 52) vorgesehen ist zur Überwachung von Funktionsdefekten im Mikrocomputer (16) und/oder von Funktionsdefekten in Peripheriegeräten des Mikrocomputers (16) und zum Abschalten des mindestens einen Ventils (2), wenn die Überwachungsschaltung einen Defekt erkennt.

9. Elektrische Steuereinrichtung nach Anspruch 8,
**dadurch gekennzeichnet,**
**dass** der Mikrocomputer (16) ein Teil der Überwachungsschaltung ist, dass die Überwachungsschaltung (16, 56, 52) eine negative Leistungsstufe (52) aufweist, die im elektrischen Pulsweg (32, 34, 46) des Ventils (2) angeordnet ist und diesen Pulsweg eingeschaltet hält, wenn kein Defekt vorliegt, die jedoch von dem Mikrocomputer (16) auf Sperrung schaltbar ist, um den Pulsweg automatisch zu unterbrechen, wenn die Überwachungsschaltung einen Defekt erkennt.

10. Verfahren zur elektrischen Steuerung eines Kraftfahrzeug-Antriebsstranges, der mindestens ein elektrisch betätigbares Ventil (2) in einer Hydraulikanlage (4) zur hydraulischen Betätigung von mindestens einem Gangschaltelement (6) in Form einer Kupplung oder einer Bremse enthält, wobei die Steuereinrichtung einen Pulserzeuger (8, 10) zur Erzeugung von elektrischen Pulsen (11) aufweist, durch welche ein elektromagnetisch bewegbarer Ventilteil (12) des Ventils relativ zu einem anderen Ventilteil (14) bewegbar ist zur Einstellung einer Ventilöffnung, wobei die Frequenz der aufeinander folgenden Pulse (11), im folgenden Ansteuerfrequenz genannt, so hoch ist, dass der bewegbare Ventilteil (12) den Pulsen (11) nicht folgen kann, sondern der bewegbare Ventilteil (12) nur in Abhängigkeit vom Effektivwert des Stromes der aufeinander folgenden Pulse (11) positionierbar ist,
**dadurch gekennzeichnet,**
**dass** unmittelbar nach einem Gangwechsel und/oder nach dem Anfahren des Kraftfahrzeuges die Ansteuerfrequenz des durch die Pulse (11) elektromagnetisch betätigbaren Ventils so erniedrigt wird, dass der durch die Pulse (11) bewegbare Ventilteil (12) Bewegungsamplituden mit einer Schwingungsfrequenz proportional zur Ansteuerfrequenz der Pulse (11) ausführt, und dass unmittelbar vor einem Gangwechsel und/oder beim Anfahren des Kraftfahrzeuges die Ansteuerfrequenz des durch die Pulse (11) elektromagnetisch betätigbaren Ventils (2) automatisch wieder so erhöht wird, dass der durch die Pulse elektromagnetisch bewegbare Ventilteil (12) keine Bewegungsamplituden proportional zur Ansteuerfrequenz mehr erzeugen kann, sondern abhängig vom Effektivwert des Stromes der aufeinanderfolgenden Pulse positionierbar ist.

## Claims

1. Electrical control device of a motor-vehicle drive train which comprises at least one electrically operated valve (2) in a hydraulic system (4) for the hydraulic operation of at least one gear-changing element (6) in the form of a clutch or a brake, with the control device having a pulse generator (8, 10) for generating electrical pulses (11) by means of which an electromagnetically movable valve part (12) of the valve can be moved in relation to another valve part (14) in order to adjust a valve opening, the frequency of the successive pulses (11), called the drive frequency in the text which follows, being so high that the movable valve part (12) cannot follow the pulses (11), but can be positioned only as a function of the root mean square (RMS) value of the current of the successive pulses (11),
**characterized**
**in that** a microcomputer device is provided which has at least one microcomputer (16) and has at least one computer program by means of which
a) immediately after a gear change or after the motor vehicle is started, the drive frequency of the valve (2) is automatically lowered to such an extent that the electrically movable valve part (12) can follow the pulses (11) and thus executes oscillation amplitudes whose frequency is dependent on the drive frequency, and
b) immediately before a gear change or when the motor vehicle is started, the drive frequency is increased again to such an extent that the electrically movable valve part (12) can no longer follow the pulses (11), but can be positioned only as a function of the RMS value of the current of the successive pulses (11).

2. Electrical control device according to Claim 1,
**characterized**
**in that** a regulating device (62, 64, 70; 16, 76, 70-2) is provided for regulating the RMS value of the current of the successive pulses (11) which are supplied to the valve (2).

3. Electrical control device according to either of the preceding claims,
**characterized**
**in that** the pulse generator (8, 10) comprises a positive power stage (10) which has a pulse output (30) for outputting the electrical pulses (11) at the said drive frequency, in that a drive-frequency output (36) of an oscillator (8) is connected to a drive-frequency input (34) of the positive power stage (10), it being possible for the microcomputer (16) to predefine a drive-frequency setpoint value (40) for the oscillator, and in that the positive power stage (10) has a setting input (44) for the RMS current value in order to set the RMS value of the current of the successive pulses (11) which are generated for the valve (2) by the positive power stage.

4. Electrical control device according to Claim 3,
**characterized**
**in that** a supply-voltage input (20) is connected to a voltage input (27) of the positive power stage (10) via a voltage-limiting circuit (24).

5. Electrical control.device according to Claim 3 or 4,
**characterized**
**in that** the positive power stage (10) is provided with a regulator (62) which generates an actuating variable for the positive power stage (10) as a function of a predefined setpoint value of the RMS current value from a setpoint-value transmitter (16, 64) and as a function of an actual value of the RMS current value from an actual-value transmitter (68, 70) of the current of the successive electrical pulses (11) of the valve (2), and thus regulates the RMS value of the electrical current of these pulses (11).

6. Electrical control device according to Claim 3 or 4,
**characterized**
**in that** an actual-value transmitter (68, 70-2) for the RMS current value of the electrical current of the successive electrical pulses (11) is connected to the microcomputer (16), in that the microcomputer (16) contains a computer program which generates an RMS current actuating variable (76) as a function of the actual value of the RMS current value and as a function of a setpoint value (74) of the RMS current value, it being possible to transmit the RMS current actuating variable from the microcomputer (16) to the setting input (44) for the RMS current value of the positive power stage (10).

7. Electrical control device according to one of the preceding claims,
**characterized**
**in that** the microcomputer (16) is connected to a voltage-supply input (20) via a voltage-stabilization circuit (18).

8. Electrical control device according to one of the preceding claims,
**characterized**
**in that** a monitoring circuit (16, 56, 52) is provided for monitoring functional faults in the microcomputer (16) and/or functional faults in peripheral units of the microcomputer (16), and for shutting off the at least one valve (2) when the monitoring circuit detects a fault.

9. Electrical control device according to Claim 8,
**characterized**
**in that** the microcomputer (16) is part of the monitoring circuit, in that the monitoring circuit (16, 56, 52) has a negative power stage (52) which is arranged in the electrical pulse path (32, 34, 46) of the valve (2) and keeps this pulse path connected when there is no fault, but which can be switched to a blocking position by the microcomputer (16) in order to automatically interrupt the pulse path when the monitoring circuit detects a fault.

10. Method for electrically controlling a motor-vehicle drive train which comprises at least one electrically operated valve (2) in a hydraulic system (4) for the hydraulic operation of at least one gear-changing element (6) in the form of a clutch or a brake, with the control device having a pulse generator (8, 10) for generating electrical pulses (11) by means of which an electromagnetically movable valve part (12) of the valve can be moved in relation to another valve part (14) in order to adjust a valve opening, the frequency of the successive pulses (11), called the drive frequency in the text which follows, being so high that the movable valve part (12) cannot follow the pulses (11), but can be positioned only as a function of the RMS value of the current of the successive pulses (11),
**characterized**
**in that** immediately after a gear change and/or after the motor vehicle is started, the drive frequency of the valve which is electromagnetically operated by the pulses (11) is lowered to such an extent that the valve part (12) which can be moved by the pulses (11) executes amplitudes of movement at an oscillation frequency in proportion to the drive frequency of the pulses (11), and in that immediately before a gear change and/or when the motor vehicle is started, the drive frequency of the valve (2) which is electromagnetically operated by the pulses (11) is automatically increased again to such an extent that the valve part (12) which can be electromagnetically moved by the pulses can no longer produce any amplitudes of movement in proportion to the drive frequency, but can be positioned as a function of the RMS value of the current of the successive pulses.

## Revendications

1. Dispositif de commande électrique pour le système de transmission d'un véhicule automobile, qui comprend au moins une vanne à commande électrique (2) dans un système hydraulique (4) pour la commande hydraulique d'au moins un élément de changement de vitesse (6) sous la forme d'un embrayage ou d'un frein, le dispositif de commande électrique présentant un générateur d'impulsions (8, 10) pour générer des impulsions électriques (11) au moyen desquelles une partie de vanne (12) déplaçable électromagnétiquement de la vanne peut être déplacée par rapport à une autre partie de vanne (14) pour régler une ouverture de vanne, la fréquence des impulsions (11) successives, appelée dans la suite fréquence d'excitation, étant si élevée que la partie de vanne (12) déplaçable ne peut pas suivre les impulsions (11), mais que la partie de vanne (12) déplaçable est positionnable seulement en fonction de la valeur efficace du courant des impulsions (11) successives,
**caractérisé par le fait**
**qu'**il est prévu un dispositif à microprocesseur avec au moins un microprocesseur (16) et avec au moins un programme informatique au moyen duquel
a) immédiatement après un changement de vitesse ou après le démarrage du véhicule automobile, la fréquence d'excitation de la vanne (2) est automatiquement diminuée au point que la partie de vanne (12) déplaçable électriquement peut suivre les impulsions (11) et effectue de ce fait des amplitudes d'oscillation dont la fréquence dépend de la fréquence d'excitation, et
b) immédiatement avant un changement de vitesse ou au démarrage du véhicule automobile, la fréquence d'excitation est de nouveau augmentée au point que la partie de vanne (12) déplaçable électriquement ne peut plus suivre les impulsions (11), mais est seulement encore positionnable en fonction de la valeur efficace du courant des impulsions (11) successives.

2. Dispositif de commande électrique selon la revendication 1,
**caractérisé par le fait**
**qu'**il est prévu un dispositif de régulation (62, 64, 70 ; 16, 76, 70-2) pour réguler la valeur efficace du courant des impulsions (11) successives qui sont amenées à la vanne (2).

3. Dispositif de commande électrique selon l'une des revendications précédentes,
**caractérisé par le fait**
**que** le générateur d'impulsions (8, 10) contient un étage de puissance positif (10) qui présente une sortie d'impulsions (30) pour délivrer les impulsions électriques (11) à la fréquence d'excitation mentionnée, qu'à une entrée de fréquence d'excitation (34) de l'étage de puissance positif (10) est reliée une sortie de fréquence d'excitation (36) d'un oscillateur (8) auquel le microprocesseur (16) peut imposer une valeur de consigne de la fréquence d'excitation (40), et que l'étage de puissance positif (10) présente une entrée de réglage de valeur efficace de courant (44) pour régler la valeur efficace du courant des impulsions (11) successives qui sont générées par l'étage de puissance positif pour la vanne (2).

4. Dispositif de commande électrique selon la revendication 3,
**caractérisé par le fait**
**qu'**une entrée de tension d'alimentation (20) est reliée via un circuit de limitation de tension (24) à une entrée de tension (27) de l'étage de puissance positif (10).

5. Dispositif de commande électrique selon la revendication 3 ou 4,
**caractérisé par le fait**
**que** l'étage de puissance positif (10) est pourvu d'un régulateur (62) qui génère en fonction d'une valeur de consigne donnée de la valeur efficace de courant d'un générateur de valeur de consigne (16, 64) et en fonction d'une valeur réelle de la valeur efficace de courant d'un générateur de valeur réelle (68, 90) du courant des impulsions électriques (11) successives de la vanne (2) une grandeur réglante pour l'étage de puissance positif (10) et régule ainsi la valeur efficace du courant électrique de ces impulsions (11).

6. Dispositif de commande électrique selon la revendication 3 ou 4,
**caractérisé par le fait**
**qu'**un générateur de valeur réelle de la valeur efficace de courant (68, 70-2) du courant électrique des impulsions électriques (11) successives est relié au microprocesseur (16), que le microprocesseur (16) contient un programme informatique qui génère en fonction de la valeur réelle de la valeur efficace de courant et en fonction d'une valeur de consigne de la valeur efficace de courant (74) une grandeur réglante de courant efficace (76) qui peut être transmise du microprocesseur (16) à l'entrée de réglage de la valeur efficace de courant (44) de l'étage de puissance positif (10).

7. Dispositif de commande électrique selon l'une des revendications précédentes,
**caractérisé par le fait**
**que** le microprocesseur (16) est relié via un circuit de stabilisation de tension (18) à une entrée d'alimentation électrique (20).

8. Dispositif de commande électrique selon l'une des revendications précédentes,
**caractérisé par le fait**
**qu'**il est prévu un circuit de surveillance (16, 56, 52) pour surveiller les défauts de fonctionnement dans le microprocesseur (16) et/ou les défauts de fonctionnement dans les équipements périphériques du microprocesseur (16) et pour couper ladite au moins une vanne (2) lorsque le circuit de surveillance détecte un défaut.

9. Dispositif de commande électrique selon la revendication 8,
**caractérisé par le fait**
**que** le microprocesseur (16) fait partie du circuit de surveillance, que le circuit de surveillance (16, 56, 52) présente un étage de puissance négatif (52) qui est disposé dans le chemin des impulsions électriques (32, 34, 46) de la vanne (2) et maintient ce chemin des impulsions ouvert lorsqu'il n'y a pas de défaut, mais qui peut être commuté sur blocage par le microprocesseur (16) pour interrompre automatiquement le chemin des impulsions lorsque le circuit de surveillance détecte un défaut.

10. Procédé pour la commande électrique du système de transmission d'un véhicule automobile, qui comprend au moins une vanne à commande électrique (2) dans un système hydraulique (4) pour la commande hydraulique d'au moins un élément de changement de vitesse (6) sous la forme d'un embrayage ou d'un frein, le dispositif de commande électrique présentant un générateur d'impulsions (8, 10) pour générer des impulsions électriques (11) au moyen desquelles une partie de vanne (12) déplaçable électromagnétiquement de la vanne peut être déplacée par rapport à une autre partie de vanne (14) pour régler une ouverture de vanne, la fréquence des impulsions (11) successives, appelée dans la suite fréquence d'excitation, étant si élevée que la partie de vanne (12) déplaçable ne peut pas suivre les impulsions (11), mais que la partie de vanne (12) déplaçable est positionnable seulement en fonction de la valeur efficace du courant des impulsions (11) successives,
**caractérisé par le fait**
**qu'**immédiatement après un changement de vitesse et/ou après le démarrage du véhicule automobile la fréquence d'excitation de la vanne (2) commandée électromagnétiquement par les impulsions (11) est diminuée au point que la partie de vanne (12) déplaçable au moyen des impulsions (11) effectue des amplitudes de mouvement à une fréquence d'oscillation proportionnellement à la fréquence d'excitation des impulsions (11), et
**qu'**immédiatement avant un changement de vitesse et/ou au démarrage du véhicule automobile la fréquence d'excitation de la vanne (2) commandée électromagnétiquement par les impulsions (11) est de nouveau automatiquement augmentée au point que la partie de vanne (12) déplaçable électromagnétiquement au moyen des impulsions (11) ne peut plus générer des amplitudes de mouvement proportionnellement à la fréquence d'excitation, mais est positionnable en fonction de la valeur efficace du courant des impulsions successives.
